# EUROPÄISCHE PATENTSCHRIFT

(11) **EP 1 155 942 B1**
(45) Veröffentlichungstag und Bekanntmachung des Hinweises auf die Patenterteilung: **14.06.2006**
(21) Anmeldenummer: 01111192.9
(22) Anmeldetag: 11.05.2001
(51) Int. Cl.: B62D 25/06, B60R 9/04

(54) **Kunststoff-Fahrzeugdach zur Aufnahme eines Lasttragaufbaus**
Plastic vehicle roof for receiving a load carrier
Toit de véhicule en matériau plastique destiné à recevoir un porte-bagages

(30) Priorität: 17.05.2000 DE 10023727
(43) Veröffentlichungstag der Anmeldung: 21.11.2001
(73) Patentinhaber: Webasto Vehicle Systems International GmbH, 82131 Stockdorf (DE)
(72) Erfinder: Lante, Christoph Tobias, 82343 Pöcking (DE); Kralik, Martin, 82362 Weilheim (DE)
(74) Vertreter: Wiese, Gerhard

(56) Entgegenhaltungen:
- EP-A- 0 366 045
- EP-A- 1 080 961
- DE-C- 4 313 555
- DE-C- 4 344 604
- FR-A- 2 632 595
- US-A- 4 475 765

## Beschreibung

Die Erfindung betrifft ein Fahrzeugdach zur Befestigung an einem Dachrahmenbereich einer Fahrzeugkarosserie gemäß dem Oberbegriff des Patentanspruchs 1.

Aus der DE 43 44 804 C1 ist ein gattungsgemäßes Fahrzeugdach bekannt, das eine tiefgezogene Dachschale aus Blech aufweist. An den Längsseiten sind zwischen der Dachschale und seitlichen Dachrahmenprofilen Fügekanäle vorgesehen, in denen die Dachschale mit den Dachrahmenprofilen verschraubt ist und die mittels einer Abdeckleiste abdeckbar sind. Durch die Abdeckleisten hindurch ist eine Dachreling mit dem Fahrzeugdach verschraubt.

Aus der EP 0 366 045 A2 ist ein Fahrzeugdach mit einer Dachplatte aus Kunststoff bekannt, nahe deren Längskanten nach unten vorspringende Befestigungsabschnitte angeformt sind, die in entsprechende Aussparungen an den Dachholmen eingesetzt und mit diesen verschraubt sind.

Aus der DE 35 45 871 A1 ist ein Kunststoff-Fahrzeugdach bekannt, das mit einer speziellen Lüftungseinrichtung versehen ist und einem Kraftfahrzeughersteller vorgefertigt zur Verfügung gestellt werden kann. Aufgrund des Kunststoffmaterials eignet sich ein derartiges Dach nicht ohne weiteres zur Aufnahme einer Dachreling bzw. eines Lasttragaufbaus.

Aus der DE 36 26 926 A1 ist eine Halterungsstruktur für eine Dachreling bzw. einen Lasttragaufbau an den Seitenrändern eines aus Stahlblech gefertigten Fahrzeugdachs bekannt. Die Arretierung einer Dachreling erfolgt dort in seitlichen Dachkanälen, die im Dachrahmenbereich gebildet sind mit Hilfe einer dort positionierten und durch Schrauben gehalterten Leiste, die sich in der Sohle des jeweiligen Dachkanals sowie seitlich auf dem Fahrzeugdach und dem Dachrahmen abstützt.

Angesichts dieses Standes der Technik liegt der Erfindung die Aufgabe zugrunde, ein Kunststoff-Fahrzeugdach zu schaffen, das zur Aufnahme einer Dachreling bzw. eines Lasttragaufbaus geeignet ist.

Gelöst wird diese Aufgabe durch ein Fahrzeugdach mit den Merkmalen des Anspruchs 1. Vorteilhafte Weiterbildungen der Erfindung sind in den Unteransprüchen angegeben.

Demnach sind stabile metallische Halterungsschienen zur Aufnahme eines Dach-Lasttrageaufbaus vorgesehen, welche einerseits unmittelbar mit dem Dachrahmenbereich der Fahrzeugkarosserie verbunden sind und andererseits das Kunststoffdach am Dachrahmenbereich derart arretieren, dass die seitlichen Ränder des Kunststoffdachs keinen schädlichen Spannungen ausgesetzt sind. Die Einleitung von Kräften vom Lasttrageaufbau in den Dachrahmenbereich erfolgt über die metallischen Halterungsschienen, ohne hierbei das Kunststoffdach übermäßig zu belasten.

Eine Halterung bzw. Arretierung des Kunststoffdachs mittels der Halterungsschienen ohne lokale Überbelastung des Kunststoffmaterials wird dadurch erreicht, dass die Halterungsschienen mit den seitlichen Rändern des Kunststoffdachs entweder in flächigem Eingriff oder im Eingriff mittels eines ausgedehnten Linienkontakts stehen.

Zugunsten einer Einleitung von Kräften aus der Dachreling oder dergleichen in einen großen Bereich des Dachrahmens ist vorteilhafterweise vorgesehen, dass die Halterungsschienen sich über die gesamte Länge des Kunststoffdachs erstrecken.

Gemäß einer bevorzugten Ausführungsform weisen die seitlichen Eingriffränder des Kunststoffdachs einen stufenartig tiefer gelegten Aufnahmebereich für die jeweilige Halterungsschiene auf, der sandwichartig zwischen der Unterseite der Halterungsschiene und dem Dachrahmenbereich eingeschlossen ist.

Zur Aufnahme einer Dachreling oder dergleichen können die Halterungsschienen unterschiedliche Konfiguration besitzen. Gemäß einer bevorzugten Ausführungsform besitzen die Halteschienen ein oben offenes Profil zur Aufnahme einer Dachreling oder dergleichen bzw. einer entfernbaren Abdeckleiste.

Auch die Verbindung zwischen Halterungsschiene und Kunststoffdach kann in unterschiedlicher Weise erfolgen. Demnach weisen beispielsweise die seitlichen Eingriffenden des Kunststoffdachs auswärts offene Aufnahmenuten für die Halterungsschienen auf. Alternativ umfassen die seitlichen Ränder des Kunststoffdachs abwärts vorstehende, von den Halterungsschienen umgriffene Profilleisten auf. Außerdem können die seitlichen Eingriffränder des Kunststoffdachs von einem Schenkel allgemein U-förmiger Halterungsschienen übergriffen sein. Ferner können die Halterungsschienen alternativ in die seitlichen Eingriffränder des Kunststoffdachs eingebettet bzw. eingeformt sein. Schließlich können die Halterungsschienen seitlich zur Verankerung von Verankerungsorganen einer Dachreling oder dergleichen untergreifbar gebildet sein.

Nachfolgend wird die Erfindung anhand von Zeichnungen beispielhaft näher erläutert. Es zeigt:
- Fig. 1: eine erste Ausführungsform der Eingriffrander und Haiterungsschienen des erfindungsgemäßen Fahrzeugdachs,
- Fig. 2: eine zweite Ausführungsform der Eingriffränder und Halterungsschienen des erfindungsgemäßen Fahrzeugdachs,
- Fig. 3: eine dritte Ausführungsform der Eingriffränder und Halterungsschienen des erfindungsgemäßen Fahrzeugdachs,
- Fig. 4: eine vierte Ausführungsform der Eingriffränder und Halterungsschienen des erfindungsgemäßen Fahrzeugdachs,
- Fig. 5: eine fünfte Ausführungsform der Eingriffränder und Halterungsschienen des erfindungsgemäßen Fahrzeugdachs, und
- Fig. 6: eine sechste Ausführungsform der Eingriffränder und Halterungsschienen des erfindungsgemäßen Fahrzeugdachs.

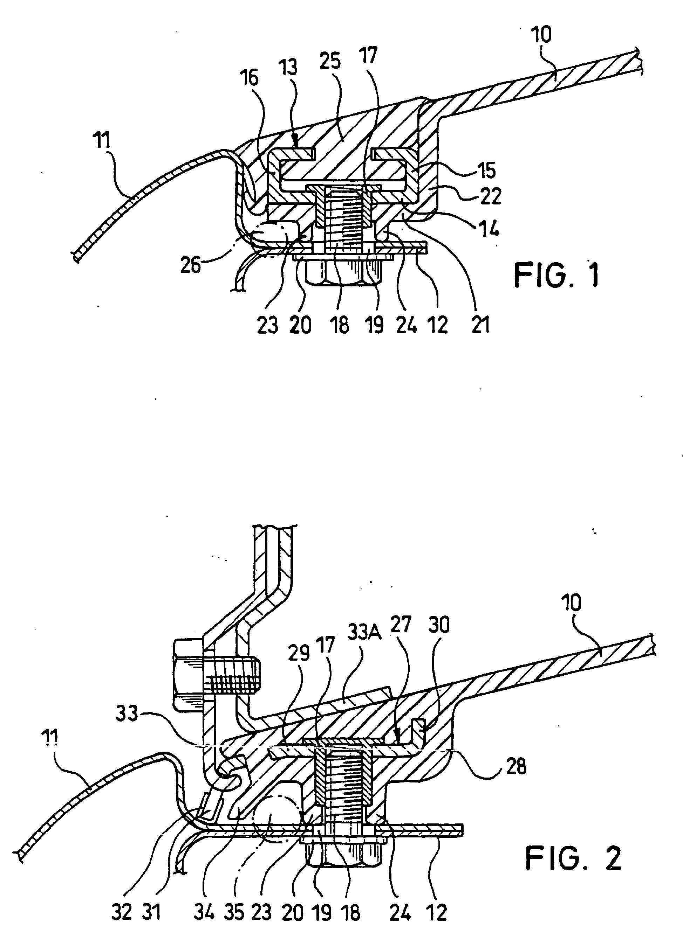

In Fig. 1 bis 6 ist ein erfindungsgemäßes Kunststoff-Fahrzeugdach im Bereich eines seiner Seitenränder im Querschnitt gezeigt. Mit der Bezugsziffer 10 ist das Kunststoffdach bezeichnet, während mit der Bezugsziffer 11 ein seitlicher holmartiger Dachrahmenbereich zur Befestigung des Kunststoffdachs 10 bezeichnet ist, welches unterschiedlich gestaltete Eingriffränder zum möglichst großflächigen Eingriff mit Halterungsschienen aufweist. Der holmartige Dachrahmenbereich 11 umfaßt einen einwärts tiefer gelegenen, stegartig einwärts vorstehenden Befestigungsabschnitt 12, der auch als Schweißkanal bezeichnet wird. Die Halterungsschiene 13 zur Festlegung des Kunststoffdachs 10 an dem Befestigungsabschnitt 12 besteht aus Metall, vorzugsweise aus Stahl und erstreckt sich im Wesentlichen entlang der vollständigen Längserstreckung des Kunststoffdachs 10.

Die in Fig. 1 gezeigte Halterungsschiene 13 besitzt ein allgemein rechteckiges, nach oben offenes Querschnittsprofil mit einem Boden 14, von diesem aufwärts vorstehenden Seitenwänden 15, 16, die an ihren oberen Enden aufeinander zu unter gegenseitigem Abstand einwärts gebogen sind und in diesem Bereich parallel zum Boden 14 verlaufen. Im Boden 14 sind voneinander beabstandet Bohrungen 19 gebildet, die zur Aufnahme von Gewindehülsen 17 dienen. Die Schnittdarstellung von Fig. 1 ist durch die Halterungsschiene 13 im Bereich einer der Gewindehülsen 17 gelegt, die mit einem Ringrand am oberen Ende die zugehörige Bohrung im Boden 14 radial übergreift, um ein Gegenlager für eine Schraube 18 zu bilden, die eine Bohrung 19 im Befestigungsabschnitt 12 durchsetzt. Die Bohrung 19 bildet eine von mehreren Bohrungen, die im Register mit den entsprechenden Bohrungen im Boden 14 angeordnet sind. Zwischen dem Kopf der Schraube 18 und der Unterseite des Befestigungsabschnitts 12 im Bereich der Bohrung 19 ist eine Unterlegscheibe 20 angeordnet. Diese kann durch einen unmittelbar an der Schraube 18 angeformten Bund ersetzt sein.

Das Kunststoffdach 10 ist über die Halterungsschiene 13 am Dachrahmenbereich 11 befestigt. Zu diesem Zweck ist der seitliche Rand (bzw. sind beide seitlichen Ränder) des Kunststoffdachs 10 stufenartig tiefer gelegt unter Ausbildung eines tiefer liegenden stegartigen Aufnahmebereichs 21, dessen Breitenabmessung in etwa der Breitenabmessung des Bodens 14 der Halterungsschiene 13 entspricht. Mit seiner Oberseite befindet sich der stegartige Aufnahmebereich 21 im vollflächigen Kontakt mit der Unterseite des Bodens 14, während die Seitenwand 15 der Halterungsschiene 13 im Kontakt mit einem im wesentlichen vertikal verlaufenden Verbindungsteil 22 zwischen dem gewölbten zentralen Teil des Kunststoffdachs 10 und dem Aufnahmebereich 21 steht. In Ausrichtung mit den Bohrungen im Boden 14 der Halterungsschiene 14 bzw. den Bohrungen 19 im Befestigungsabschnitt 12 des Dachrahmenbereichs 11 sind im Aufnahmebereich 21 des seitlichen Rands des Kunststoffdachs 10 Bohrungen vorgesehen, die mit den beiden anderen Bohrungsreihen im Dachrahmenbereich und der Halterungsschiene fluchten und von den Gewindehülsen 17 durchsetzt sind.

Von der Unterseite des Aufnahmebereichs 21 des Kunststoffdachrands stehen abwärts gleich lange zueinander parallel verlaufende Stege 23, 24 vor, die einstückig mit dem Aufnahmebereich 21 gebildet sind und auf der Oberseite des Befestigungsabschnitts 12 des Dachrahmenbereichs 11 aufstehen. Bei angezogener Schraube 18 preßt die Halterungsschiene 13, die vollflächig im Eingriff mit der Oberseite des randseitigen Aufnahmebereichs 21 des Kunststoffdachs 10 steht, diesen Aufnahmebereich 21 über den Linienkontakt zwischen der Unterseite der Stege 23, 24 gegen die Oberseite des Befestigungsabschnitts 12.

Die nach oben offene Halterungsschiene 13 dient zur Aufnahme einer nicht gezeigten Dachreling bzw. eines Lasttragaufbaus, die bzw. der mit einem entsprechenden Arretierungsorgan von oben in die Halterungsschiene 13 eingreift. Wenn kein Lasttragaufbau durch die Halterungsschiene 13 getragen werden soll, ist die nach oben offene Halterungsschiene 13 durch eine Abdeckleiste 25 abgedeckt. Die Abdeckleiste 25 ist bevorzugt ein Kunststoffspritzgußteil, dessen Oberseite an die Wölbung des Dachverlaufs angepaßt ist und damit den seitlichen Dachrahmenbereich 11 mit dem Kunststoffdach 10 unter Bildung einer kontinuierlichen Konturlinie verbindet. Die Unterseite der Abdeckleiste 25 ist komplementär zum Querschnitt der Halterungsschiene 13 mit einer Einschnürung zur Halterung der Abdeckleiste in der Halterungsschiene 13 versehen.

Da die Halterungsschiene 13 vollflächig im Eingriff mit dem randseitigen Aufnahmebereich des Kunststoffdachs 10 steht, wird gewährleistet, dass das Material des Kunststoffdachs 10 in diesem Bereich durch die herrschenden Festspannkräfte nicht zu stark beansprucht wird. Außerdem wird durch die unmittelbar mit der Karosserie über dem Dachrahmenbereich 11 verbundene Halterungsschiene 13 gewährleistet, dass Kräfte aus der durch die Halterungsschiene 13 gehalterten Dachreling bzw. den dort aufgenommenen Lasttragaufbau direkt über die Halterungsschiene 13, die Gewindebuchse 17 und die Schraube 18 mit Unterlegscheibe 20 in den Dachrahmenbereich 11 eingeleitet wird.

Zur Abdichtung des Kunststoffdachs 10 gegenüber dem Dachrahmenbereich 11 ist ein im Querschnitt kreisförmiges Dichtungsband 26 vorgesehen, das zwischen der Unterseite des Aufnahmebereichs 21 des Kunststoffdachs 10 und der Oberseite des Befestigungsabschnitts 12 außen im Dichtsitz angeordnet ist.

In Fig. 2 ist eine abgewandelte Ausführungsform der Halterungsanordnung gemäß Fig. 1 gezeigt, wobei für dieselben Teile wie in Fig. 1 dieselben Bezugsziffern verwendet sind.

Während bei der Ausführungsform gemäß Fig. 1 eine nach oben offene Halterungsschiene 13 zur Festlegung des Kunststoffdachs 10 am Dachrahmenbereich 11 sowie zur Aufnahme einer Dachreling oder dergleichen vorgesehen ist, ist in Fig. 2 die Halterungsschiene 27 in das Material des Seitenrands des Kunststoffdachs 10 integriert bzw. eingebettet. Zu diesem Zweck ist der Seitenrand (bzw. sind die Längsseitenränder) des Kunststoffdachs 10 dicker bzw. stärker ausgebildet als der übrige Bereich des Kunststoffdachs. In diesen verstärkten Randbereich 28 ist die Halterungsschiene 27 eingebettet. Insbesondere besitzt die in den von der Unterseite des Kunststoffdachs 10 abwärts vorstehenden verstärkten Randbereich 28 eingesetzte Halterungsschiene 27 zugunsten einer ablössicheren Verankerung innerhalb dieses Randbereichs 28 im Querschnitt L-förmige Gestalt mit einem langen L-Schenkel 29, der in etwa parallel zum Befestigungsabschnitt 12 des Dachrahmenbereichs 11 verläuft, und mit einem kurzen L-Schenkel 30, der vom einwärts gelegenen Ende des L-Schenkels 29 aufwärts vorsteht. Der lange L-Schenkel 29 erstreckt sich seitlich aus dem verstärkten Randbereich 28 des Kunststoffdachrands heraus und endet abwärts verlaufend auf dem Befestigungsabschnitt 12. Dieser abwärts verlaufende Stützabschnitt 31 stützt sich auf dem Befestigungsabschnitt 12 im Übergangsbereich zu dem dort aufwärts verlaufenden Dachrahmen 11 ab. Bevorzugt trägt das Ende des Stützabschnitts 31 zur Verminderung der Reibung gegenüber dem Befestigungsabschnitt 12 einen im Querschnitt U-förmigen Kunststoffaberzug 32 bzw. eine Kunststoffmanschette. Am oberen Ende des Stützabschnitts 31 im übergang zu dem langen L-Schenkel 29 ist die Halterungsschiene 27 zu Aufnahme eines Verankerungsorgans 33 durchbrochen, das sich mit einem Schenkel 33 A auf der Oberseite des Kunststoffdachs 10 abstützt. Die Gewindehülse 17 zur Halterung der Halterungsschiene 27 bzw. des Kunststoffdachs 10 am Befestigungsabschnitt 12 des Dachrahmens 11 durchsetzt eine Bohrung im langen Schenkel 29 der Halterungsschiene 27 und die Gewindehülse 17 ist im Gewindeeingriff mit der Schraube 18, wie auch im Fall des Ausführungsbeispiels gemäß Fig. 1. Die Gewindehülse 17 durchsetzt eine Bohrung im unteren Teil des verstärkten Randbereichs 28 des Kunststoffdachs 10, von welchem Bereich die Stege 23, 24 vorstehen, deren Funktion bereits anhand von Fig. 1 erläutert wurde. Außen liegend vom Steg 23 ist an die Unterseite des verdickten Randbereichs 28 ein weiterer, auswärts schräg vorstehender Steg 34 angeformt, der zusammen mit dem Steg 23 eine Nut zur Aufnahme eines Dichtungsbands 35 festlegt.

Auch die in Fig. 2 gezeigte Ausführungsform der erfindungsgemäßen Halterungsanordnung gewährleistet eine unmittelbare Krafteinleitung von einer Dachreling bzw. einem Lasttragaufbau über deren Verankerungsorgane 33, 33 A in den Dachrahmenbereich über die Halterungsschiene 27, die Gewindehülse 17, die Schraube 18 und die Unterlegscheibe 20. Außerdem gewährleistet die in den verstärkten Randbereich 28 des Kunststoffdachs 10 großflächig eingebettete Halterungsschiene 27 eine Halterung des Kunststoffdachs 10 ohne für deren Randbereich schädliche Spannungskräfte.

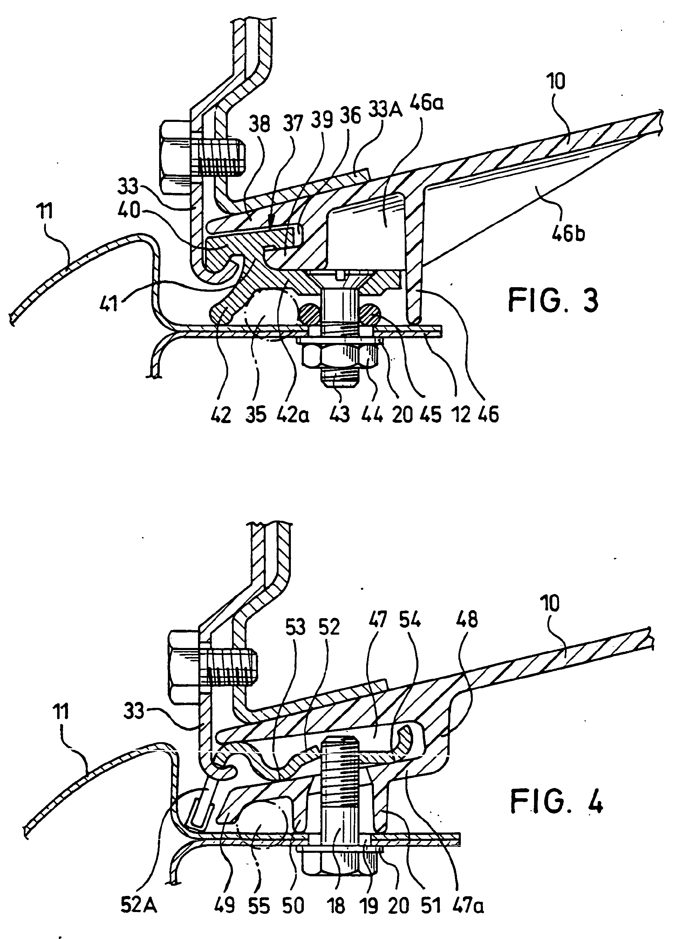

Fig. 3 zeigt eine Abwandlung der Halterungsanordnung gemäß Fig. 1 und 2, wobei dieselben Bestandteile wiederum mit denselben Bezugsziffern bezeichnet sind.

Gemäß Fig. 3 ist der Kunststoffdachseitenrand (bzw. sind die beiden Kunststoffdachseitenränder) 10 mit einer auswärts offenen Aufnahmenut 36 für eine Halterungsschiene 37 versehen, die in der gezeigten Schnittebene schräg nach außen abwärts verläuft und nach oben durch eine Nutwand 38 begrenzt ist, die sich seitlich über eine untere Nutwand 39 hinaus erstreckt. Die Halterungsschiene 37 besitzt eine allgemein T-förmige Querschnittsform mit einem verzweigten vertikalen T-Balken 41. Der in etwa horizontal verlaufende T-Balken 40 der Halterungsschiene 37 greift mit seinem einwärts vom vertikalen T-Balken 41 verlaufenden Teil in die Aufnahmenut 36 ein und grenzt mit der Oberseite des horizontalen T-Balkens 40 an die Innenseite der oberen Nutwand 38 der Aufnahmenut 36 an. Der außen liegende Rand des horizontalen T-Balkens 40 verläuft abwärts gebogen in Art einer Nase und dient zum Eingriff des unteren Hakenendes des Verankerungsorgans 33 einer Dachreling bzw. eines Lastaufbaus (jeweils nicht gezeigt). Ein Schenkel des Verankerungsorgans 33 liegt auf der Oberseite des Kunststoffdachs 10 im Bereich der oberen Nutwand 38 dort auf, wo das Dach im Bereich der Aufnahmenut 47 verstärkte Struktur besitzt.

Der vertikale T-Balken 41 ist an seinem unteren Ende verzweigt in einen nach auswärts gebogen verlaufenden Stegteil 42, der mit einem abgerundeten Außenende auf der Oberseite des Befestigungsabschnitts 12 aufsteht, und in einen einwärts verlaufenden Stegteil 42, der das Gegenlager für eine Schraube 43 bildet, deren Funktion äquivalent zu der Schraube 18 der beiden vorstehend genannten Ausführungsformen ist, jedoch kopfüber angeordnet ist, d.h., mit einem konischen Schraubenkopf in einer ebenfalls konischen Bohrung des Stegteils 42 aufgenommen ist und mit seinem Schaftteil eine Mutter 44 durchsetzt, die über eine Unterlegscheibe 45 an der Unterseite des Befestigungsabschnitts 12 des Dachrahmenbereichs 11 angreift. Zur Abdichtung ist wiederum das Dichtungsband 35 vorgesehen, das zwischen der Unterseite der beiden Stegteile 42, 42a und der Oberseite des Befestigungsabschnitts 12 im Dichtsitz angeordnet ist. Eine weitere Dichtung, z.B. eine O-Ring-Dichtung 45, umschließt den Schaft der Schraube 43 auf der Oberseite des Befestigungsabschnitts 12.

Einwärts gelegen von der Aufnahmenut 36 steht von der Unterseite des Kunststoffdachs 10 eine Rippe 46 vor, die mit ihrem unteren Ende spannungsfrei auf der Oberseite des Befestigungsabschnitts 12 aufsteht und beiderseits durch Querrippen 46a, 46b verstärkt ist, von denen die außen liegende Querrippe 46a an den Aufnahmenutteil des Kunststoffdachs 10 angrenzt und einstückig mit diesem gebildet ist.

Auch auf die in Fig. 3 gezeigte Halterungsanordnung treffen die für die beiden vorangehenden Ausführungsformen erläuterten Vorteile einer Krafteinleitung von der Dachreling bzw. dem Lasttragaufbau in den Dachrahmenbereich und die großflächige Einspannung des Kunststoffdachrands zu.

Fig. 4 zeigt eine abgewandelte Ausführungsform der in Fig. 3 gezeigten Halterungsanordnung mit seitlich offener Aufnahmenut 47. Diese Aufnahmenut 47 ist festgelegt durch den seitlichen Außenrand des Kunststoffdachs 10 und einen an die Unterseite des Kunststoffdachs 10 angeformten, in etwa parallel zum Dachrand verlaufenden Stegteil 47a, der über einen innen gelegenen Verbindungssteg 48 in die Unterseite des Kunststoffdachs 10 übergeht. Das außen gelegene Ende 49 des Stegteils 47a verläuft schräg nach außen abwärts gebogen und endet mit Abstand über der Oberseite des Befestigungsabschnitts 12 aufgrund von zwei seitlich einwärts gelegenen Stützstegen 50 und 51, die von der Unterseite des Stegteils 47 vorstehen, mit ihren abgerundeten Enden auf der Oberseite des Befestigungsabschnitts 12 aufstehen und länger sind als das abwärts verlaufende Ende 49 des Stegteils 47a. Zwischen den Stützstegen 50, 51 ist wiederum eine Vielzahl von Bohrungen bzw. Durchbrüchen im Stegteil 47a vorgesehen, die mit den Bohrungen 19 im Befestigungsabschnitt 12 und Bohrung in einer Halterungsschiene 52 fluchten, die in die Aufnahmenut 47 eingesetzt ist und aus dieser Nut seitlich mit einem Stützabschnitt 53 vorsteht, dessen Funktion dem Stützabschnitt 31 der Halterungsschiene 27 in Fig. 1 entspricht, einschließlich der Funktion, das Verankerungsorgan 33 einer Dachreling bzw. eines Lasttragaufbaus aufzunehmen.

Im Gegensatz zu den vorstehend angeführten Ausführungsformen befindet sich die Halterungsschiene 52 nicht im flächigen Eingriff mit der Wandung der Aufnahmenut 47, sondern im ausgedehnten Linienkontakt mit dieser, der im dargestellten Ausführungsbeispiel zwei Kontaktlinien, die in Längsrichtung des Kunststoffdachs 10 verlaufen, umfaßt, nämlich eine Kontaktlinie 53 und eine seitlich dazu versetzte Kontaktlinie 54 zwischen der Halterungsschiene 52 und dem Stegteil 47a. Dieser mehrfache Linienkontakt der Halterungsschiene 52 mit dem Stegteil 47a kommt dadurch zustande, dass die Halterungsschiene 52 innerhalb der Aufnahmenut 47 einen gewellten Verlauf mit Wellentälern im Bereich der Linienkontakte 53 und 54 aufweist.

Ebenfalls im Unterschied zu den vorausgehend erläuterten Ausführungsformen gemäß Fig. 1 und 2 umfaßt die in Fig. 4 gezeigte Halterungsanordnung als Gegenlager für die Schraube 18 keine in eine entsprechende Bohrung der Halterungsschiene 52 eingesetzte Gewindehülse; vielmehr greift die Schraube 18 mit ihrem Gewindeschaft direkt in eine Bohrung in der Halterungsschiene 52 ein.

Ähnlich wie bei der in Fig. 2 gezeigten Ausführungsform ist auch bei der in Fig. 4 gezeigten Ausführungsform ein Dichtungsband 56 zwischen dem runden vorstehenden Ende 49 des Stegteils 47a und dem einwärts von diesem Ende liegenden Stützsteg 50 angeordnet und befindet sich im übrigen im Dichteingriff mit der Oberseite des Befestigungsabschnitts 15 des Dachrahmenbereichs 11.

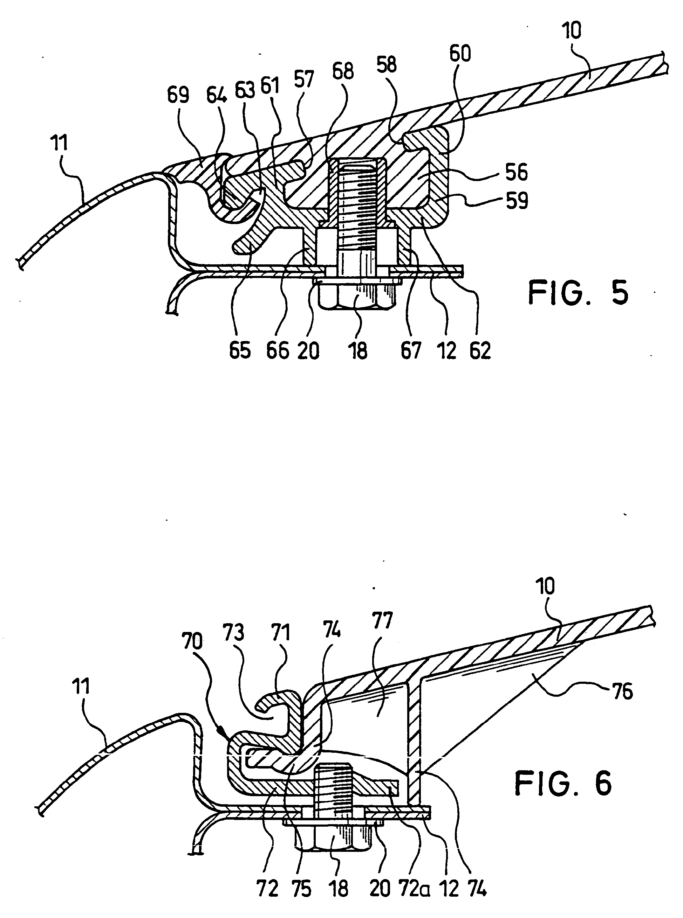

Die in Fig. 5 gezeigte Halterungsanordnung umfaßt von der Unterseite der seitlichen Ränder des Kunststoffdachs 10 vorstehende, sich entlang diesen Rändern erstreckende und einstückig mit dem Kunststoffdach gebildete Profilleisten 56, die von den Halterungsschienen umklammert sind. Insbesondere besitzt jede Profilleiste 56 ein Profil mit seitlichen Längsnuten 57 und 58 angrenzend an die Unterseite des Kunststoffdachs 10, die einwärts bzw. auswärts offen sind. Die zugehörige Halterungsschiene 59 ist eine nach oben offene Profilschiene mit einem Profilverlauf komplementär zu demjenigen der Profilleiste 56. Das heißt, die Halterungsschiene besitzt Seitenwände 60 und 61, die an ihren Enden einwärts aufeinander zugebogen verlaufen und mit diesen Enden in die Längsnuten 57, 58 der Profilleiste 56 eingreifen, die mit ihrer Unterseite in vollflächigem Kontakt mit der Innenseite des Bodens 62 der Halterungsschiene steht. Mit anderen Worten füllt die Profilleiste 56 den Innenraum der Halterungsschiene vollständig aus. Die Profilschiene 56 steht also mit ihrer Außenseite vollflächig in Kontakt mit der Innenseite der Halterungsschiene 59.

Die Außenkontur der Halterungsschiene 59 zur Aufnahme des Verankerungsorgans 33 einer Dachreling bzw. eines Lasttragaufbaus ist identisch ausgebildet zu der in Fig. 3 gezeigten Ausführungsform, d.h., sie besitzt eine Eingriffrille 63 für das untere hakenförmige Ende des Verankerungsorgans, die festgelegt ist durch eine auswärts nach unten vorspringende Nase 64, die einstückig mit der Seitenwand 61 gebildet ist, und einen konkav auswärts verlaufenden Fortsatz 65 der Seitenwand 61, die über dem Befestigungsabschnitt 12 des Dachrahmenbereichs 11 endet.

Von der Unterseite des Bodens 62 der Halterungsschiene 59 stehen zwei parallel in Längsrichtung des Kunststoffdachs 10 verlaufende Stützleisten 66, 67 vor, die mit ihren unteren Enden auf dem Befestigungsabschnitt 12 aufstehen. Zur Festlegung der Halterungsschiene 59 am Dachrahmenbereich 11 dienen wiederum eine Vielzahl von Schrauben, von denen in Fig. 5 die Schraube 18 gezeigt ist, die mit ihrem Kopf über die Unterlegscheibe 30 an der Unterseite des Befestigungsabschnitts 12 anliegt. Das Gegenlager für die Schraube 18 ist durch eine Gewindehülse 68 festgelegt, die integral mit dem Boden 62 der Halterungsschiene 69 gebildet ist, diesen durchsetzt und in eine zylindrische Ausnehmung der Profilleiste 56 des Kunststoffdachs 10 eingreift.

Der zwischen dem Außenrand des Kunststoffdachs 10 und der hochstehenden abgerundeten Kante des Dachrahmenbereichs 11 verbleibende Spaltraum kann gegebenenfalls mit einer Abdeckleiste 69 abgedeckt werden, deren Oberseite an den Konturverlauf von Dach und Dachrahmenbereich angepaßt ist, und die ein abwärts vorspringendes Hakenende aufweist, welches die Eingriffrille 63 hintergreift und die Abdeckleiste 69 dadurch lösbar verankert, die bevorzugt zumindest im Hakenbereich aus elastischem Kunststoffmaterial besteht.

Auch die in Fig. 5 gezeigte Ausführungsform der erfindungsgemäßen Halterungsanordnung gewährleistet eine Einleitung der Verankerungskraft für die Dachreling oder dergleichen über die Halterungsschiene und deren Befestigungsschrauben in den Dachrahmenbereich 11 hinein, ohne dabei den Rand des Kunststoffdachs 10 zu belasten, welches im übrigen derart in der Schiene aufgenommen ist, dass seine stabile Halterung gewährleistet ist, ohne dass Spannungen in das Dach eingeleitet werden, die zu dessen Beschädigung führen könnten.

Eine weitere Ausführungsform der erfindungsgemäßen Halterungsanordnung ist in Fig. 6 gezeigt. Bei dieser Halterungsanordnung besitzt die Halterungsschiene 70 im Querschnitt in etwa eine S-Form, wobei eine oben liegende S-Schleife 71 eine Eingriffrille 73 für ein oder mehrere Verankerungsorgane einer Dachreling oder dergleichen festlegt, die nach außen in Richtung auf die gegenüberliegende gewölbte Kante des Dachrahmenbereichs 11 offensteht. Die andere S-Schleife 72 der S-förmigen Halterungsschiene 70 ist einwärts zum Dach vorspringend in einen flachen Halterungsabschnitt 72a verlängert, in welchem eine Gewindebohrung zum Eingriff der Schraube 18 vorgesehen ist, die sich mit ihrem Kopf auf der Unterseite des Befestigungsabschnitts 12 des Dachrahmenbereichs 11 abstützt, wie beispielsweise in Fig. 1 im einzelnen erläutert ist.

Die Halterungsschiene 70 befindet sich in ihrer Montagestellung auf der Oberseite des Befestigungsabschnitts 12 unter Abstand von dessen Oberseite, in dieser Stellung gehalten durch das Kunststoffdach 10, welches sich mit einer von seiner Unterseite vorspringenden, parallel zum Seitenrand des Dachs 10 verlaufenden Rippe 74 auf dem Befestigungsabschnitt 12 abstützt und andererseits mit einem tiefgezogenen Außenrandende 75, das im Querschnitt Hakenform besitzt, die S-Schleife 71 der Halterungsschiene 70 im wesentlichen form- und kraftschlüssig untergreift. Um die Stabilität der Stützrippe 74 zu gewährleisten, sind eine Vielzahl von in Dachlängsrichtung beabstandeten Querrippen 76 vorgesehen, die einstückig mit der Stützrippe 74 und dem übrigen Kunststoffdach 10 gebildet sind und einwärts von der Stützrippe 74 zu liegen kommen. Weitere Querrippen 77 sind zwischen der Stützrippe 74 und dem Außenrandende 75 des Kunststoffdachs 10 jeweils einstückig mit diesen gebildet, um die Stabilität dieses Außenrandendes 75 und der Stützrippe zu fördern.

Auch die in Fig. 6 gezeigte Halterungsstruktur gewährleistet eine Einleitung von Halterungskräften für eine Dachreling oder dergleichen über die Halterungsschiene 70 in den Dachrahmenbereich 11, ohne hierbei das Kunststoffdach 10 zu belasten, welches seinerseits durch die Halterungsschiene spannungsfrei am Dachrahmenbereich 11 gehaltert ist.

### Bezugszeichenliste

- 10: Kunststoffdach
- 11: Dachrahmenbereich
- 12: Befestigungsabschnitt
- 13: Halterungsschiene
- 14: Boden
- 15: Seitenwand
- 16: Seitenwand
- 17: Gewindehülse
- 18: Schraube
- 19: Bohrung
- 20: Unterlegscheibe
- 21: Aufnahmebereich
- 22: Verbindungsteil
- 23: Steg
- 24: Steg
- 25: Abdeckleiste
- 26: Dichtungsband
- 27: Halterungsschiene
- 28: verdickter Randbereich
- 29: langer L-Schenkel
- 30: kurzer L-Schenkel
- 31: Stützabschnitt
- 32: Kunststoffüberzug
- 33: Verankerungsorgan
- 33A: Schenkel
- 34: Steg
- 35: Dichtungsband
- 36: Aufnahmenut
- 37: Halterungsschiene
- 38: obere Nutwand
- 39: untere Nutwand
- 40: horizontaler T-Balken
- 41: vertikaler T-Balken
- 42: Stegteil
- 42a: Stegteil
- 43: Schraube
- 44: Mutter
- 45: O-Ringdichtung
- 46: Rippe
- 47: Aufnahmenut
- 48: Verbindungssteg
- 49: Ende
- 50: Stützsteg
- 51: Stützsteg
- 52: Halterungsschiene
- 53: Kontaktlinie
- 54: Kontaktlinie
- 55: Dichtungsband
- 56: Profilleiste
- 57: Längsnuten
- 58: Längsnuten
- 59: Halterungsschiene
- 60: Seitenwand
- 61: Seitenwand
- 62: Boden
- 63: Eingriffrille
- 64: Nase
- 65: Fortsatz
- 66: Stützleiste
- 67: Stützleiste
- 68: Gewindehülse
- 69: Abdeckleiste
- 70: Halterungsschiene
- 71: S-Schleife
- 72: S-Schleife
- 72a: Eingriffrille
- 73: Halterungsabschnitt
- 74: Stützrippe
- 75: Außenrandende
- 76: Querrippe
- 77: Querrippe

## Patentansprüche

1. Fahrzeugdach zur Befestigung an einem Dachrahmenbereich (11, 12) einer Fahrzeugkarosserie, wobei das Kunststoffdach (10) seitliche Eingriffränder zum flächigen Eingriff bzw. zum ausgedehnten Linienkontakt mit Halterungsschienen (13. 27, 37, 52, 59, 70) aufweist, die mit dem Dachrahmenbereich verschraubbar und zur Aufnahme einer Dachreling bzw. eines Lasttragaufbaus ausgelegt sind, **dadurch gekennzeichnet, dass** das Fahrzeugdach aus Kunststoff besteht und die seitlichen Eingriffränder des Kunststoffdachs (10) in Längsrichtung dieser Ränder verlaufende, abwärts vorspringende Stege (23, 24) zum Punkt- bzw. Linien-Kontakt-Eingriff mit dem Dachrahmenbereich (11, 12) umfassen.

2. Fahrzeugdach nach Anspruch 1, **dadurch gekennzeichnet, dass** die Eingriffränder des Kunststoffdachs (10) und die Halterungsschienen (13, 27, 37, 52, 59, 70) sich zumindest im Wesentlichen über die gesamte Länge des Kunststoffdachs (10) erstrecken.

3. Fahrzeugdach nach Anspruch 1 oder 2, **dadurch gekennzeichnet, dass** die seitlichen Eingriffränder des Kunststoffdachs (10) einen stufenartig tiefer gelegten Aufnahmebereich (21) für die jeweilige Halterungsschiene (13) aufweisen, der sandwichartig zwischen der Unterseite der Halterungsschiene (13) und dem Dachrahmenbereich (11, 12) eingeschlossen ist.

4. Fahrzeugdach nach Anspruch 3, **dadurch gekennzeichnet, dass** die Halterungsschienen (13, 27) ein oben offenes Profil zur Aufnahme von Verankerungsorganen (33) einer Dachreling bzw. eines Lasttragaufbaus oder einer entfernbaren Abdeckleiste (25) besitzen.

5. Fahrzeugdach nach Anspruch 1 oder 2, **dadurch gekennzeichnet, dass** die seitlichen Eingriffränder des Kunststoffdachs (10) auswärts offene Aufnahmenuten (36) für die Halterungsschienen (37) aufweisen.

6. Fahrzeugdach nach Anspruch 1 oder 2, **dadurch gekennzeichnet, dass** die seitlichen Eingriffränder des Kunststoffdachs (10) abwärts vorstehende, von den Halterungsschienen (52) umgriffene Profilleisten (56) umfassen.

7. Fahrzeugdach nach Anspruch 1 oder 2, **dadurch gekennzeichnet, dass** die seitlichen Eingriffränder des Kunststoffdachs (10) von einem Schenkel U-förmiger Halterungsschienen übergriffen sind.

8. Fahrzeugdach nach Anspruch 1 oder 2, **dadurch gekennzeichnet, dass** die Halterungsschienen (27) in die seitlichen Eingriffränder des Kunststoffdachs (10) eingebettet bzw. eingeformt sind.

9. Fahrzeugdach nach einem der Ansprüche 5 bis 8, **dadurch gekennzeichnet, dass** die Halterungsschienen (13, 27, 37, 52, 59, 70) seitlich zur Verankerung von Arretierungsorganen (33) einer Dachreling bzw. eines Lasttragaufbaus untergreifbar gebildet sind.

10. Fahrzeugdach nach einem der Ansprüche 5 bis 8, **dadurch gekennzeichnet, dass** die Halterungsschienen (27, 37, 52, 59, 70) zur Verankerung von Arretierungsorganen (33) einer Dachreling bzw. eines Lasttragaufbaus aus den Eingriffrändem des Kunststoffdachs (10) seitlich auswärts vorstehende Abschnitte aufweisen.

11. Fahrzeugdach nach Anspruch 10, **dadurch gekennzeichnet, dass** sich die Halterungsschienen (27, 37, 52, 59, 70) mit ihren seitlich auswärts vorstehenden Abschnitten auf dem Dachrahmenbereich (11, 12) abstützen.

## Claims

1. Vehicle roof for fixing to a roof frame region (11, 12) of a vehicle body, the plastic roof (10) having lateral engaging edges for flat engagement or for extended linear contact with retaining rails (13, 27, 37, 52, 59, 70) which can be screwed to the roof frame region and are designed to receive a roof rail or a load-bearing structure, **characterized in that** the vehicle roof consists of plastic and the lateral engaging edges of the plastic roof (10) comprise webs (23, 24) which run in the longitudinal direction of these edges and project downwards for the purpose of point or line contact engagement with the roof frame region (11, 12).

2. Vehicle roof according to Claim 1, **characterized in that** the engaging edges of the plastic roof (10) and the retaining rails (13, 27, 37, 52, 59, 70) extend at least substantially over the entire length of the plastic roof (10).

3. Vehicle roof according to Claim 1 or 2, **characterized in that** the lateral engaging edges of the plastic roof (10) have a step-like deeper receiving region (21) for the respective retaining rail (13), which is enclosed in the manner of a sandwich between the underside of the retaining rail (13) and the roof frame region (11, 12).

4. Vehicle roof according to Claim 3, **characterized in that** the retaining rails (13, 27) have a profile that is open at the top in order to receive anchoring elements (33) of a roof rail or of a load-bearing structure or of a removable cover strip (25).

5. Vehicle roof according to Claim 1 or 2, **characterized in that** the lateral engaging edges of the plastic roof (10) have receiving grooves (36) that are open outwards for the retaining rails (37).

6. Vehicle roof according to Claim 1 or 2, **characterized in that** the lateral engaging edges of the plastic roof (10) comprise profiled strips that project downwards and are embraced by the retraining rails (52).

7. Vehicle roof according to Claim 1 or 2, **characterized in that** the lateral engaging edges of the plastic roof (10) are engaged over by one leg of U-shaped retaining rails.

8. Vehicle roof according to Claim 1 or 2, **characterized in that** the retaining rails (27) are embedded in or moulded into the lateral engaging edges of the plastic roof (10).

9. Vehicle roof according to one of Claims 5 to 8, **characterized in that** the retaining rails (13, 27, 37, 52, 59, 70) are formed such that they can be engaged under laterally in order to anchor locking elements (33) of a roof rail or of a load-bearing structure.

10. Vehicle roof according to one of Claims 5 to 8, **characterized in that** the retaining rails (27, 37, 52, 59, 70) have sections that project laterally outwards from the engaging edges of the plastic roof (10) in order to anchor locking elements (33) of a roof rail or of a load-bearing structure.

11. Vehicle roof according to Claim 10, **characterized in that** the retaining rails (27, 37, 52, 59, 70) are supported on the roof frame region (11, 12) by their laterally outwardly projecting sections.

## Revendications

1. Toit de véhicule destiné à être fixé à une zone (11, 12) d'encadrement de pavillon d'une carrosserie de véhicule, le toit (10) en matière plastique présentant des bords latéraux pour la venue en prise à plat, respectivement pour la venue en contact linéaire de grande ampleur avec des rails de retenue (13, 27, 37, 52, 59, 70) qui peuvent être solidarisés par boulonnage avec la zone d'encadrement du pavillon, et sont conçus pour recevoir respectivement une galerie ou une structure porte-bagages, **caractérisé par le fait que** le toit du véhicule consiste en une matière plastique, et les bords latéraux de venue en prise dudit toit (10) en matière plastique comprennent des membrures (23, 24) saillant vers le bas et s'étendant dans le sens longitudinal de ces bords, pour la venue en prise respective par contact ponctuel ou linéaire avec ladite zone (11, 12) d'encadrement du pavillon.

2. Toit de véhicule, selon la revendication 1, **caractérisé par le fait que** les bords de venue en prise du toit (10) en matière plastique et les rails de retenue (13, 27, 37, 52, 59, 70) s'étendent, au moins pour l'essentiel, sur toute la longueur dudit toit (10) en matière plastique.

3. Toit de véhicule, selon la revendication 1 ou 2, **caractérisé par le fait que** les bords latéraux de venue en prise du toit (10) en matière plastique comportent une zone réceptrice (21) surbaissée à la manière d'un gradin, affectée au rail de retenue considéré (13), et prise en sandwich entre la zone (11, 12) d'encadrement du pavillon et la face inférieure dudit rail de retenue (13).

4. Toit de véhicule, selon la revendication 3, **caractérisé par le fait que** les rails de retenue (13, 27) possèdent un profil ouvert en partie haute en vue de recevoir, respectivement, des organes d'ancrage (33) d'une galerie ou d'une structure porte-bagages, voire d'un jonc de recouvrement (25) amovible.

5. Toit de véhicule, selon la revendication 1 ou 2, **caractérisé par le fait que** les bords latéraux de venue en prise du toit (10) en matière plastique présentent des rainures réceptrices (36) ouvertes vers l'extérieur et destinées aux rails de retenue (37).

6. Toit de véhicule, selon la revendication 1 ou 2, **caractérisé par le fait que** les bords latéraux de venue en prise du toit (10) en matière plastique comprennent des barrettes profilées (56) saillant vers le bas et ceinturées par les rails de retenue (52).

7. Toit de véhicule, selon la revendication 1 ou 2, **caractérisé par le fait que** les bords latéraux de venue en prise du toit (10) en matière plastique sont coiffés par une branche de rails de retenue configurés en U.

8. Toit de véhicule, selon la revendication 1 ou 2, **caractérisé par le fait que** les rails de retenue (27) sont respectivement noyés ou intégrés par moulage dans les bords latéraux de venue en prise du toit (10) en matière plastique.

9. Toit de véhicule, selon l'une des revendications 5 à 8, **caractérisé par le fait que** les rails de retenue (13, 27, 37, 52, 59, 70) sont configurés pour pouvoir être emprisonnés latéralement par-dessous, en vue de l'ancrage respectif d'organes d'arrêt (33) d'une galerie ou d'une structure porte-bagages.

10. Toit de véhicule, selon l'une des revendications 5 à 8, **caractérisé par le fait que** les rails de retenue (27, 37, 52, 59, 70) comportent, en vue de l'ancrage respectif d'organes d'arrêt (33) d'une galerie ou d'une structure porte-bagages, des segments faisant saillie vers l'extérieur, dans le sens latéral, hors des bords de venue en prise du toit (10) en matière plastique.

11. Toit de véhicule, selon la revendication 10, **caractérisé par le fait que** les rails de retenue (27, 37, 52, 59, 70) prennent appui, par leurs segments saillant latéralement vers l'extérieur, sur la zone (11, 12) d'encadrement du pavillon.
